# EUROPEAN PATENT APPLICATION

(11) **EP 2 323 429 A2**
(43) Date of publication of application: **18.05.2011**
(21) Application number: 10188640.6
(22) Date of filing: 25.10.2010
(51) Int. Cl.: H04W 4/12

(54) **System, method and network entity for screening USSD messages**

(30) Priority: 26.10.2009 GB 0918739
(71) Applicant: France Télécom SA, 75505 Paris Cedex 15 (FR)
(72) Inventor: Romero, Inigo, BS8 2EY (GB); Mahmood, Tariq, Bradley Stoke, Bristol (GB); Chintalapati, Raju, Bradley Stoke (GB); Allan, Robert, Heswall, CH60 8NJ Wirral (GB)
(74) Representative: McCann, Heather Alison

(57) **Abstract**

A network entity and method for processing a USSD message belonging to a USSD communication session. The USSD communication session comprises a sequence of USSD messages in an interchange between two end terminals such that each of USSD messages of the sequence have a prescribed USSD communication session TD. The network entity responsive to a received USSD message whereby to perform a screening process in respect of a received USSD message. The screening process comprises evaluating the received USSD message on the basis of a predetermined criterion. The predetermined criterion is based on at least one USSD message previous to the received USSD message and being one of the sequence of USSD messages of a given session, whereby to identify the received USSD as a first type of USSD message or a second, different, type of USSD message. The first type of USSD message is considered to be incompatible with the USSD communications session, and, in the event that the received USSD message is determined to be of the first type, the network entity is discards the received USSD message.

## Description

### Field of the Invention

The present invention relates to a method, system and network entity for screening a USSD message.

### Background of the Invention

Unstructured Supplementary Service Data (USSD) is a session based message interchange typically between a Mobile Station (MS) and a USSD Application Service. The USSD session can either be initiated by the MS, i.e. the pull mode of operation, or can be initiated by the USSD Application Service, i.e. the push mode of operation. The push and pull modes of operation of the USSD communication are described in GSM 02.90 V8.0.0, entitled "Digital cellular telecommunications system (Phase 2+); Unstructured Supplementary Service Data (USSD) - Stage 1", ETSI TS 100 549 V7.0.0, entitled "Digital cellular telecommunications system (Phase 2+); Unstructured Supplementary Service Data (USSD) - Stage 2", GSM 04.90 version 7.0.1, entitled "Unstructured Supplementary Service Data (USSD); Stage 3" and 3GPP TS 23.090 V8.0.0, entitled "Unstructured Supplementary Service Data (USSD); Stage 2", the contents of which are incorporated herein by reference.

A USSD communication session, per both pull and push modes of operation, comprises a sequence of messages in an interchange between two end terminals, each USSD message of the sequence having a prescribed communication session ID. The prescribed USSD communication session ID is allocated to the communication session by a USSD Gateway (GW) or the USSD Application Service.

The USSD GW is adapted to route USSD messages from a signalling network, such as a GSM network, to the USSD Application Service, and from the USSD Application Service to the signalling network. The USSD GW is also adapted to keep track of ongoing sessions and, in some arrangements, the USSD GW also keeps track of a location of a current point of attachment of the MS.

A session module of the USSD GW is responsible for maintaining the active USSD communication sessions, and destroying USSD communication sessions which have been terminated or which have been inactive for more than a predetermined period of time. The USSD GW allocates a USSD communication session ID, in response to receiving a USSD session begin message. In some arrangements, such as in the absence of the USSD GW, the USSD communication session ID would be allocated by the USSD Application Service. The USSD GW routes a received USSD message using the Short Message Peer-to-Peer (SMPP) protocol.

As discussed above, the USSD GW routes USSD messages from a signalling network to the USSD Application Service and from the USSD Application Service to the signalling network. Signalling System Number 7 (SS7) is a set of telephony signalling protocols commonly used in public switched telephone networks. As is well known in the prior art, the functionality of the physical, data-link and network layer, per the Open System Interconnection (OSI) Reference Model, is provided by the Message Transfer Part (MTP) and the Signalling Connection Control Part (SCCP) in the SS7. The application layer functionality, per the OSI Reference Model, is provided by the Transaction Capabilities Application Part (TCAP), which in a communications network, such as GSM, carries Mobile Application Part (MAP) messages.

As discussed above, the USSD communication session can be initiated by the MS or the USSD AS. The mobile initiated USSD service commences with a MS dialling a USSD string, such as *#123#. A template USSD string format is "*#SC*<data>#", wherein SC stands for the service code and the data field is a text string which can contain any number of characters.

The service code serves as an identity of a USSD application service and is utilised for routing the message to the USSD Application Service. The USSD Application Service may reside in a Mobile Switching Centre (MSC), a Visitor Location Register (VLR), a Home Location Register (HLR) or an entity specially designed for hosting the USSD Application Service, such as a USSD Application Server (AS).

A mobile initiated USSD session, i.e. the pull mode of operation, begins with the MS dialling the USSD string. The USSD string is packaged in a USSD message, and sent to the MSC. The MSC checks whether the service code contained in the USSD string is recognised. If the USSD string is recognised by the MSC, the MSC routes the USSD message to a corresponding USSD Application Service. In the event that the service code is not recognised by the MSC, the MSC forwards the USSD message to the VLR. The VLR is a temporary database that tracks a given MS currently being served by the MSC under it's jurisdiction. Therefore, the VLR would only be involved in service provisioning to the MS, when the MS is roaming away from its home network. The VLR again checks the service code contained in the USSD message against a list of known service codes, and if the service code is recognised, the VLR routes the USSD message to a corresponding USSD Application Service. If the service code was not recognised by the VLR, the USSD message is forwarded to the HLR, which also matches the service code against a list of known service codes. If the code is recognised by the HLR, the USSD message is routed to a corresponding USSD Application Service, but if not, then the USSD message is discarded.

A TCAP dialogue is initiated after the MS has dialled the USSD string, with a MAP_PROCESS_UNSTRUCTURED_SS_DATA message sent to the USSD GW. The request is routed by the MSC to the USSD GW. In some arrangements, specifically those in which the MS is within a home network, the request would be routed via the HLR without any involvement of the VLR. The USSD GW determines a particular USSD application service, such as the USSD AS, by checking the USSD string dialled, and routes the received USSD message accordingly. The USSD AS and the MS may transmit further USSD messages within a same USSD communication session.

In case the USSD communication session is network initiated, i.e. the push mode of operation, the TCAP dialogue is initiated with either a MAP_UNSTRUCTURED_SS_DATA_REQUEST message or a MAP_UNSTRUCTURED_SS_DATA_NOTIFY message.

The USSD Application Service can be hosted within a mobile communications network, or may be hosted externally to a mobile communications network. In case of the externally hosted USSD Application Services, a USSD AS may interact with the communications network utilising a USSD GW that may be internal or external to the communications network. In a first arrangement, such as where the external USSD application is hosted by a Mobile Virtual Network Operator (MVNO), the USSD services are handled by a dedicated USSD GW at the MVNO end such that the USSD GW has direct access to the HLR of the communications network. In a second arrangement, such as a small volume service provider, the service provider may utilise a USSD GW at the communications network end.

Since there are no mechanisms for policing USSD messages, it is left to the MVNO or the external service provider to honour their respective Service Level Agreements (SLA) in relation to usage of the network resources. Therefore, the mobile communications network, especially per the first arrangement, is excessively exposed to the external entities, which leaves the entire communications network vulnerable to abuse from the external entities.

### Summary of the Invention

In accordance with one aspect of the present invention, there is provided a network entity, a method and a telecommunications system according to the appended claims.

The embodiments of the invention are concerned with screening Unstructured Supplementary Service Data (USSD) messages. In one arrangement there is provided a network entity for processing a USSD message belonging to a USSD communication session, the USSD communication session comprising a sequence of USSD messages in an interchange between two end terminals, each USSD message of the sequence having a prescribed USSD communication session ID, the network entity being responsive to a received USSD message whereby to perform a screening process in respect of said received USSD message, the screening process comprising:
evaluating the received USSD message on the basis of a predetermined criterion, wherein the predetermined criterion is based on at least one USSD message previous to the received USSD message and being one of the sequence of USSD messages of a given session, whereby to identify the received USSD as a first type of USSD message or a second, different, type of USSD message, the first type of USSD message being incompatible with the USSD communications session,
wherein, in the event that the received USSD message is determined to be of the first type, the network entity is arranged to discard the received USSD message.

Thus in embodiments of the invention, received USSD messages are classified according to their compatibility with a corresponding USSD communication session, and any USSD message that is identified as being incompatible with a corresponding USSD session is discarded. Therefore, the network entity enables screening of USSD messages to identify any messages that are incompatible with a corresponding USSD communication session. In preferred arrangements, the network entity would screen a given USSD message before it reaches a core network node, such as a Home Location Register, thereby saving the valuable resources of the core network nodes, which would have otherwise been expended by the core network node on processing the incompatible USSD message. In addition, the network entity would reduce the exposure of the core network nodes to the external entities.

In a second arrangement, such as where the network entity is unable to configure the predetermined criterion, the network entity is arranged to screen a received USSD message on the basis of a further criterion. The further criterion for screening a given USSD message extends the scope of screening to an overall message structure of the received USSD message, and thereby extending the scope of screening beyond ensuring USSD session compatibility.

In a third arrangement, the network entity further comprises a routing means. In the event that a received a received USSD message is determined to be compatible with a corresponding USSD communication session, the routing means is arranged to determine a network node to transmit the received USSD message on the basis of transmission data associated with the received USSD message, and transmit the received USSD message to the determined network node. In a preferred arrangement, the network entity is arranged to determine the network node on the basis of a previous message in a corresponding USSD communication session. The routing means extends the capability of determining the network node to route a received USSD message, which in some arrangements, reduces the latency of the received USSD message.

In a fourth arrangement, the network entity is further arranged to determine a second USSD message using a second communication protocol such that the second communication protocol is different to a first communication protocol of a received USSD message. The network entity generates the second USSD message, if the received USSD message is determined to be compatible with a corresponding USSD communication session. Since the network entity is capable of performing the functionalities of a USSD Gateway, such as converting protocols of received USSD messages, the functionalities of the network entity and the USSD Gateway can be combined into a single entity. Thus, the embodiments of the invention may be implemented on existing entities, thereby reducing the changes required for implementing the embodiments of the invention to the communications network architecture.

In a fifth arrangement, the network entity is arranged to selectively perform the screening process on the basis of a predetermined communication condition. The selective execution of the screening process extends the capability of discarding messages early, without even executing the screening process, and thus increases the USSD message screening capacity of the network entity.

According to further aspects of the present invention the network entity is embodied as a single computing device, or as a computing system comprising a cluster of computing devices. The network entity is configured, either as a single device, or a cluster of devices, to perform a method corresponding to the afore-mentioned functionality, and indeed said device or devices are configured with computer code capable of performing the corresponding steps.

Further features and advantages of the invention will become apparent from the following description of preferred embodiments of the invention, given by way of example only, which is made with reference to the accompanying drawings.

### Brief Description of the Drawings

Figure 1 is a schematic diagram of a network environment per the conventional prior art systems;
Figure 2 is a schematic diagram of a network environment within which the embodiments of the invention operate;
Figure 3 is a block diagram showing components of a network entity of Figure 1 configured according to an embodiment of the invention;
Figure 4 is a schematic flow diagram of a USSD message in the network environment according to an embodiment of the invention; and
Figure 5 is a timing diagram showing steps performed by the components shown in Figure 1 when operating in accordance with an embodiment of the invention.

### Detailed Description of the Invention

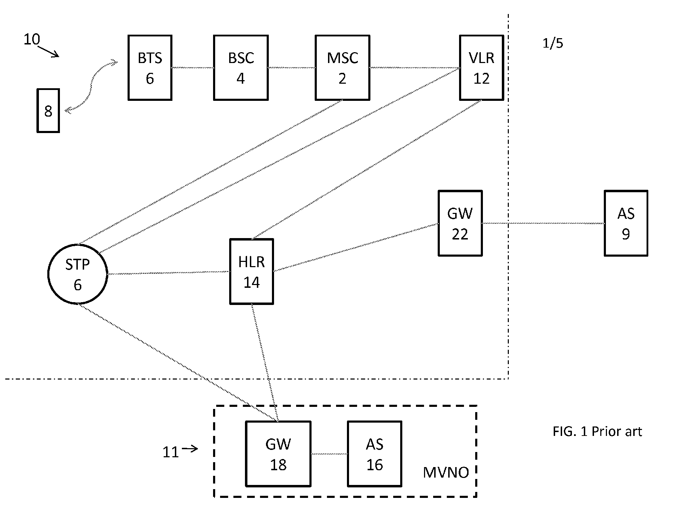

Embodiments of the invention are concerned with the screening of Unstructured Supplementary Service Data (USSD) messages in a telecommunications system. More specifically, embodiments are concerned with identifying and discarding USSD messages that are incompatible with a USSD communication session. The processing involved in screening USSD messages according to embodiments of the invention will be described in detail below, but first an overview of an environment within which embodiments can operate will be described with reference to Figure 1, which shows a conventional cellular communications network 10, such as a Global system for mobile telecommunication (GSM) network, comprising mobile switching centre (MSC) 2 connected via communications links to a number of base station controllers (BSCs) 4. The BSCs 4 are dispersed geographically across areas served by the MSC 2 and, as is known in the art, each BSC 4 controls one or more base transceiver stations (BTSs) 6 located remote from, and connected by, further communications links to, the BSC 4. Each BTS 6 transmits radio signals to, and receives radio signals from, Mobile Stations (MS) 8 which are in an area (known as a "cell") served by that BTS 6.

The MSC 2 is also connected via communications links to other MSCs (not shown), in the remainder of the communications system 10, and can be connected to a public switched telephone network (PSTN). The network is provided with a home location register (HLR) 14, which is arranged to provide the MSC 2 with data relating to a user upon request (typically populating a visitor location register (VLR) 12, which is part of, or accessible by, the MSC 2). The MSC 2 is capable of handling service provision for both post-pay or contract users and prepaid users of the network in the area it serves. Thus, users may originate or receive a range of data, including multimedia, video, voice, data or fax calls or sessions, USSD messages, short messages using the Short Message Service (SMS), email messages, enhanced or multimedia messages, and may access data resources over private or public data networks such as the Internet. Signalling and data in respect of services provided to mobile stations 8 are routed via MSC 2.

The cellular communications network 10 further comprises a USSD Gateway (USSD GW) which, as discussed above, routes messages between a signalling network, such as the communications network 10, and a USSD Application Service. In case the USSD Application Service is running on a USSD AS which utilises a different communication protocol, such as IP, the USSD GW converts the protocol of messages as they are transferred between the signalling network and the USSD Application Service.

In one arrangement, such as the one where the USSD GW 22 is a part of the cellular communications network 10, a USSD Application Server 9 utilises a USSD GW 22 located within the cellular communications network 10 for provisioning USSD Application Services to a user of the MS 8.

In other arrangements, such as the Mobile Virtual Network Operator (MVNO) 11, the USSD Application Server 16 utilises a USSD GW 18 situated externally to the cellular communications network 10 for provisioning USSD Application Services to a user of the MS 8.

The cellular communications network 10 also includes Signal Transfer Points (STP) 6, which is a router that relays SS7 messages between signalling end-points and other STPs. In the arrangement, per figure 1, the STP 6 is utilised to route the USSD message traffic from the USSD GW 18 to the MSC 2, VLR 12 and the HLR 14.

As discussed above, a USSD communication session can be mobile-initiated or network-initiated. A USSD communication session is initiated when the USSD Application Service or the MS 8 sends a request to initiate a USSD communication session, and the session stays active until a request to terminate the session is received or if a timer associated with the USSD Application Service expires.

As per the conventional systems, a mobile-initiated USSD communication session begins with a user entering a service code and the text string on a keypad (not shown) of MS 8. The service code serves as an identity of a USSD Application Service running on the USSD AS, and the service code is utilised for routing the message to a corresponding USSD Application Service. The USSD string is sent in a USSD message from the MS 8 to the MSC 2/VLR 12. If the service code is recognised by the MSC 2/VLR 12, then the USSD message is routed to a USSD Application Service running on the USSD AS, corresponding to the service code. If the service code is not recognised, then the USSD message is routed to the HLR 14. The HLR 14 analyzes the service code to determine whether a corresponding USSD Service Application is defined within the service data held by the HLR 14. The HLR 14 then routes the USSD message according to the service code.

In one arrangement, such as where the service code corresponds to the USSD Application Service running on the USSD Application Server 16, the USSD message routed by the HLR 14 is received at the USSD GW 18. If the USSD message corresponds to an active USSD communication session, then the USSD GW 18 routes the USSD message to the USSD AS 16. In one arrangement, such as where the communications network 10 and the USSD AS 16 utilise a different communication protocol, the USSD GW 18 converts the received USSD message in a communication protocol of the USSD AS 16. The USSD Application Service of the USSD AS 16 then processes the message, per the data contained in the USSD message.

As will be appreciated, the STP 6 routes the USSD traffic originating at the MVNO 11 end to the HLR 14, VLR 12 or the MSC 2 as per transmission data, such as a recipient ID, contained in a received USSD message. A network entity, such as the USSD GW, capable of processing a USSD message, can also route a received USSD message on the basis of a USSD communication session property, such as a USSD communication session ID.

Therefore, a USSD message originating from the USSD AS 16 is routed to the MS 8 on the basis of a recipient ID, such as a MSISDN, IMSI, etc., or a USSD communication session ID. A subsequent message in a given USSD communication session is routed on a same session path as a USSD session initiation message.

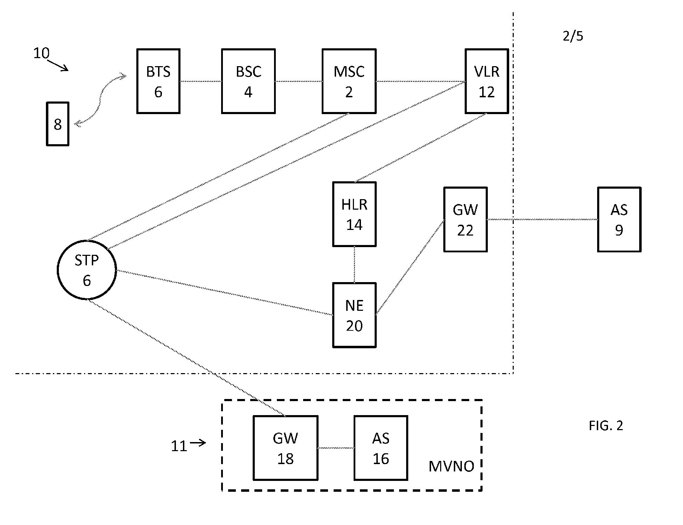

Turning to Figure 2, in addition to the conventional components described above, the communications network 10 includes a network entity 20 according to an embodiment of the invention, which is capable of analysing and performing bespoke message handling actions in respect of a USSD message belonging to a USSD communication session. As can be seen in the configuration of the communications network 10, the STP 6 is arranged to route the USSD messages originating from the MVNO 11 USSD AS 16 to the network entity 20. Since the communications network 10 has no control over the USSD GW 18 of the MVNO 11, the STP 6 is utilised to divert the USSD traffic that otherwise be routed to the MSC 2, the VLR 12 and the HLR 14 to the network entity 20.

In an alternative arrangement, such as where the communications network 10 can exercise control over a USSD GW 22, the USSD GW 22 is configured to divert the USSD traffic to the network entity 20.

As discussed above, a USSD service may be provisioned by the communication network 10, or the USSD service may be provisioned by an USSD application service external to the communications network 10. The external USSD application services, depending on an individual Service Level Agreement (SLA), may have direct access to the core network entities, such as the HLR 14. In a typical scenario, the external USSD application service may even appear internal to the core network entities. This poses a great risk to the operation of the communication network 10, and makes the communications network 10 vulnerable. The network entity 20 has also been designed to shield the communications network 10 from such vulnerabilities. In a further embodiment, the network entity 20 is configured to evaluate whether the external USSD Application Service is compatible with the agreed terms of the SLA.

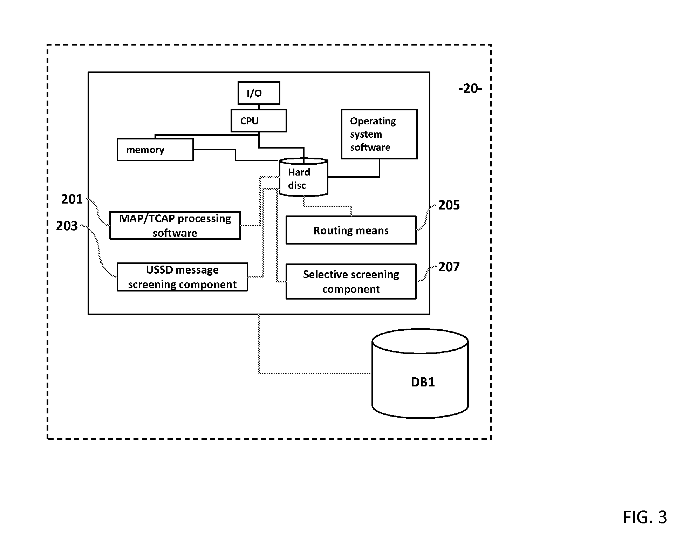

Turning to Figure 3, an arrangement of the network entity 20 will now be described in more detail. The network entity 20 comprises a combination of processing components including standard operating system components, memory, processor, Input/Output interfaces, permanent storage and MAP/TCAP processing software component 201. The MAP/TCAP processing software component 201 is entirely conventional, comprising software routines arranged to execute the processes defined within standards 3GPP TS 09.02, entitled "Mobile Application Part (MAP) specification", 3GPP TS 29.002, entitled "Mobile Application Part (MAP) specification" and ITU-T Q.773, entitled "Specifications of Signalling System No. 7 - Transaction capabilities application part".

In addition the network entity 20 comprises a USSD message screening component 203, which, responsive to a received USSD message, performs a screening process in respect of a given received USSD message. As described above, the received USSD message belongs to a USSD communication session, which comprises a sequence of messages in an interchange between e.g., the MS 8 and the USSD AS 16. The screening process involves the screening component 203 evaluating the received USSD message on the basis of a predetermined criterion. The predetermined criterion is based on at least one USSD message previous to the received USSD message and being one of the above-mentioned sequence of USSD messages. The screening process involves the screening component 203 identifying the received USSD as a first type of USSD message or a second, different, type of USSD message, the first type of USSD message being incompatible with the USSD communications session. In the event that the received USSD message is determined to be of the first type, the network entity is arranged to discard the received USSD message.

As discussed above, the screening process evaluates the contents of the USSD message to identify whether the received message is incompatible with the USSD communication session. Without limitation, examples of USSD messages that are incompatible with an associated USSD communication session, i.e. the USSD messages of the first type, are-
- if the received USSD message is of the type begin USSD communication session, when a USSD communication session is already in progress between the end terminals;
- if in response to a USSD request message a further USSD request message is received, before receiving a USSD response; and
- if a continue USSD communication message is received, after receiving an end USSD communication session message.

In a preferred arrangement, the network entity 20 is adapted to screen all the USSD messages, before routing a given USSD message further. The screening process involves the screening component 203 discarding a given USSD message that is incompatible, or inconsistent, with an associated USSD communication session. This reduces the load on the USSD message processing entities by removing incompatible USSD messages.

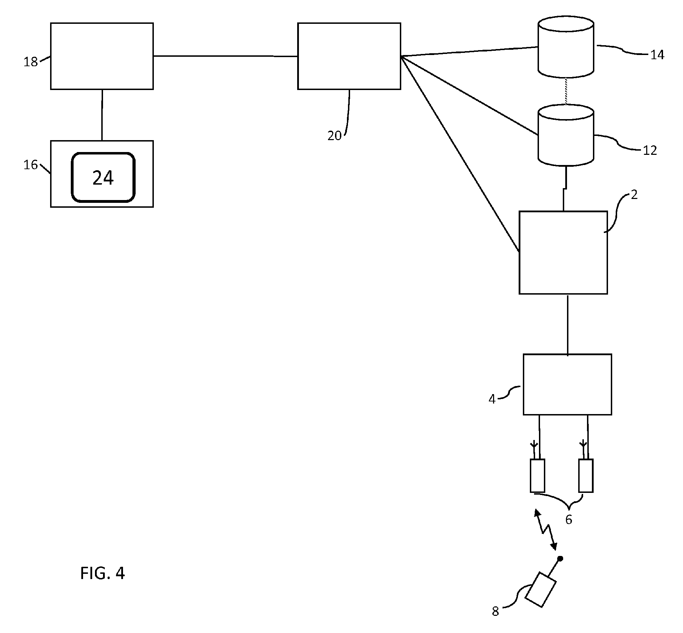

Figure 4 is a schematic network diagram illustrating a flow of a USSD message per an embodiment of the invention. In this example a USSD communication session is initiated by the MS 8 by the sending of a USSD communication session initiation message comprising a USSD string.

In one arrangement, such as where a service code contained in the USSD string corresponds to a USSD Application Service 24 running on the USSD AS 16, the USSD message is routed via the MSC 2 to the VLR 12.

According to a first arrangement, such as where the network entity 20 is arranged to screen all the USSD messages routed to an entity external to the communications network 10, the VLR 12 forwards the received USSD message to the HLR 14, which then transmits the message to the network entity 20. It will be clear to a person skilled in the art that a message redirecting means, such as an STP 6, can also be used to route USSD traffic transmitted by the HLR 14 to the network entity 20.

According to a second arrangement, such as where the network entity 20 is arranged to screen all USSD messages before they are processed by the HLR 14, the VLR 12 or the MSC 2 routes the received USSD message to the network entity 20. As discussed above, the message redirection means may be employed for diverting messages transmitted by the VLR 12 to the network entity 20.

According to a third arrangement, such as where the network entity 20 is not arranged to screen a USSD message exiting the communications network 10, the VLR 12 routes the received USSD message to the HLR 14, which then routes the received USSD message to the USSD GW 18.

It will be understood by a person skilled in the art that a USSD message can be diverted to the network entity 20 by any network node, such as the MSC 2, which is on a message delivery path of the USSD message.

In arrangements where the USSD message transmitted by the MS 8 is diverted to the network entity 20, responsive to receiving the USSD message the screening component 203 is arranged to screen the received USSD message. Since the received USSD message is a USSD communication session initiation message, there would not be any USSD messages in the USSD communication session that were transmitted previously to the received USSD message. Therefore, the screening component 203 cannot determine whether the received USSD message is compatible with a previous USSD message.

However, the screening component 203 can screen the received USSD message on the basis of a further screening criterion, such as performing MAP layer consistency checks that are described in detail below. In the event that a screening condition, such as compatibility of a USSD message with a corresponding USSD communication session, is not satisfied, the network entity 20 is arranged to discard the received USSD message.

In an arrangement such as where the received USSD message is determined to satisfy a screening condition, the network entity 20 is arranged to transmit the received USSD message on the basis of transmission data contained in the received USSD message. In an exemplary scenario, the network entity 20 transmits the received USSD message to the USSD GW 18, which then transmits the received USSD message to the USSD AS 16 to be processed by the USSD Application Service 24.

Consider the scenario where the USSD Application Service 24, responsive to receiving the received USSD message, generates a further USSD message for transmission to the MS 8. The further USSD message would be transmitted to the USSD GW 18 by the USSD AS 16. In corresponding arrangements the USSD GW 18 would process the further USSD message, and transmit the further USSD message on the basis of the transmission data contained in the received USSD message.

However, in an arrangement according to an embodiment of the invention, such as where the USSD GW 18 is configured to transmit all the received USSD messages to the network entity 20, the USSD GW 18 transmits the further USSD message to the network entity 20.

In another arrangement according to an embodiment of the invention, such as where the USSD GW 18 is arranged transmit a given USSD message on the basis of transmission data contained in the given USSD message, the communications network 10 employs a message redirection means, such as a STP 6, to redirect all the USSD traffic originating from an entity, such as the USSD GW 18, external to the communications network 10 to the network entity 20.

As discussed above, responsive to receiving the further USSD message the screening component 203 of the network entity 20 is arranged to screen the further USSD message to determine whether the further USSD message satisfies the screening condition. As will be appreciated, the further USSD message is in response to an earlier USSD message, and the further USSD message and the USSD message correspond to a same USSD communication session.

Thus, since the received USSD messages correspond to the at least one previous message of the USSD communication session, the screening is performed on the basis of a predetermined criterion, which relates to a previous USSD message of the session. For example the screening process can involve the screening component 203 identifying messages that are compatible with the USSD communication session, i.e. ensuring session consistency based on the TCAP layer checks. The screening process can involve the screening component 203 inspecting the TCAP layer of the further USSD message to determine a USSD communication session message interchange, or dialogue, property, such as a USSD message type. The screening process can involve the screening component 203 verifying whether the dialogue property is compatible with a dialogue property of the retrieved at least one previous message. In the event that the further message is determined to be of the first type, i.e. the further USSD message is determined to be inconsistent with the at least one previous message, the screening component 203 is arranged to discard the further USSD message.

In the event that the further USSD message is determined to be of the second type, i.e. the further message is determined to be compatible with the at least one previous message, the network entity 203 is arranged to route the received USSD message in accordance with transmission data associated with the further USSD message.

As will be appreciated, core network elements, such as the HLR 14, the VLR 12 and the MSC 2, have an important part to play in processing and delivering a variety of communication types, in addition to the USSD messages. The screening component 203 reduces the load on such core network entities by eliminating USSD messages that are not compatible with the USSD communication session. In effect, the network load is reduced and the resources of the core network entities are not expended on processing any USSD messages that are inconsistent the USSD communication session. These inconsistent messages, in a typical scenario, may seriously affect the processing capabilities of the core network nodes, and may even lead to crashing of a core network node. As will be appreciated, this will affect the operation of the entire communications network 10.

In one arrangement, such as where the network entity 20 configures the predetermined criterion before receiving the further USSD message, the network entity 20 is arranged to configure the predetermined criterion after processing the received USSD message. The network entity 20 may store the configured predetermined criterion in an internal memory, or in a database DB1 external to the network entity 20. The network entity 20 is arranged to store the predetermined criterion for a predetermined time, wherein the predetermined time is arranged to coincide with a timeout associated with the corresponding USSD communication session. In the event that the network entity 20 does not receive the USSD message before the expiry of the predetermined time, the network entity 20 is arranged to discard the predetermined criterion, and consider the USSD communication session as inactive and terminated. The pre-configuration of the predetermined criterion reduces the processing time for screening the received USSD message. This is because the network entity does not have to configure the predetermined criterion in response to receiving the further USSD message.

In a second arrangement, such as where the network entity does not pre-configure the predetermined criterion, the network entity 20 configures the predetermined criterion in response to receiving the further USSD message. This arrangement reduces the burden of maintaining and storing, a set of predetermined criterion in relation to every active USSD communication session.

In other embodiments of the invention the screening is performed on the basis of at least one further criterion. For example, in the event that the network entity 20 is unable to configure the predetermined criterion in the manner described above, the screening process involves the screening component 203 to screen the further USSD message on the basis of the further criterion.

It will be appreciated that the screening process may be based on either of the predetermined criterion, the further criterion or a combination of the predetermined criterion and the further criterion.

The further criterion includes performing MAP, TCAP and SCCP layer consistency and integrity checks. For example, the further criterion may include verifying MAP layer consistency checks, such as verifying a MAP version number, flow control checks, such as verifying that a maximum number of permitted dialogues have not been reached, and verifying a parameter, such as a Mobile Identification Number, contained in the further USSD message. In addition, the further criterion can include policies relating to treatment of USSD messages originating from an entity external to the communications network 10, such as a policy that requires all external entity initiated USSD communication sessions to be rejected. In addition, the further criterion can include verifying whether the USSD Application service should be provisioned to the MS 8, i.e. access permissions of the MS 8, etc.

The further criterion may also include one or more of the following:
a service code of the received USSD message;
a USSD session communication ID;
a visitor location register associated with an end terminal of the USSD communication session;
a mobile switching centre associated with an end terminal of the USSD communication session;
a recipient of the received USSD message;
a sender of the received USSD message;
an ID of a sender of the USSD message;
an ID of a recipient of the USSD message; and
the received USSD message's association with a given USSD communication session.

The network entity 20, specifically the USSD message screening component 203, utilises the service code to identify whether a received USSD message corresponds to a valid USSD application service. The USSD communication session ID is utilised to identify whether a received USSD message corresponds to a valid USSD communication session. In addition, the network entity 20 may utilise the VLR 12 and the MSC 2 details to verify whether the MS 8 is permitted to access a USSD application service when associated with a given VLR 12 and a given MSC 2. The network entity 20 may also utilise the details of the end terminals, such a recipient ID or a sender ID, of the USSD message, to screen a received USSD message. The network entity 20 may further utilise the properties of a particular USSD communication session to screen a received USSD message.

In a further arrangement, such as where a received USSD message is USSD communication session initiation message, the screening process involves the screening component 203 to utilise the further criterion for screening the received USSD message. A further USSD message to the USSD communication session initiation message may be screened on the basis of the predetermined criterion, the further criterion, or both the predetermined criterion and the further criterion.

Consider the example where the USSD Application Service 24 transmits a USSD communication session initiation message corresponding to a USSD communication session which is already active. Such a USSD message will have been sent in error, because the USSD technical specification does not permit more than one active USSD session between two given end points. With conventional arrangements, the processing of the USSD message would have utilised valuable processing resources of a core network entity, such as the HLR 14, before being discarded. By contrast, and with embodiments of the invention, the predetermined criterion would identify this message as inconsistent because of the inconsistent dialogue property, i.e. two USSD communication session initiation messages in the same USSD communication session, and the received USSD message would also be considered inconsistent by the further criterion because of the breach of the maximum allowed sessions. Since the network entity 20 discards such USSD messages during the screening process, the network entity 20 thus eliminates such inconsistent messages, and saves valuable processing resources of the core network entities.

In at least some embodiments of the invention, the network entity 20 can further comprise a routing means 205. The routing means 205 is arranged to route received USSD messages that have been determined to be compatible with a corresponding USSD communication session, to a network node. The routing means 205 is arranged to determine the network node on the basis of the transmission data associated with the received USSD message.

For example the routing means may determine the network node on the basis of a recipient ID, such as a MSISDN, a service code, etc, contained in the transmission data. Alternatively the network node may be determined on the basis of a USSD communication session ID associated with the received USSD message.

In an arrangement, such as where a given received USSD message corresponds to a USSD communication session with at least one previously transmitted USSD message, the network node may be determined on the basis of the at least one previously transmitted USSD message. Since, as is well known in the art, each of the USSD messages in a given USSD communication follows a similar network path to reach an end terminal. Examples of the network node(s) to which the USSD messages is routed is described below.

In conventional arrangements such as where a USSD communication session initiation message is transmitted from the MS 8 end, the USSD communication session initiation message is routed on the basis of the service code, and the information relating a given USSD Application Service with the service code is not stored in every entity capable of processing a received USSD message. Therefore, any core network entity, such as the MSC 2, the VLR 12 and the HLR 14, would transfer the received USSD message to a next core network entity, if it does not recognise the service code contained in the received USSD communication session initiation message. However, once a corresponding USSD Application Service has been located, there is no reason for a further USSD message to the received USSD message belonging to the same USSD communication session generated by the MS 8, to travel on a message delivery path of the USSD communication session initiation message. Therefore, according to an embodiment of the invention, the routing means 205 is arranged to analyse the at least one previous message belonging to the same USSD communication session as the received USSD message to determine a most appropriate network node to transmit the received USSD message accordingly.

In an arrangement, such as where the MSC 2 is arranged to route a USSD message generated by the MS 8 to the network entity 20, a USSD communication session initiation message transmitted by the MS 8 is routed to the network entity 20 by the MSC 2. The screening component 203 screens the message to determine whether the received message satisfies a screening condition. In the event the USSD communication session initiation message satisfies the screening condition, the routing means 205 routes the USSD communication session initiation message to the VLR 12. The routing means 205 routes the message to the VLR 12 because the routing means 205 does not have enough information to route the USSD communication session initiation message to a corresponding USSD Application Service 24. The VLR 12 forwards the message to the HLR 14, which then forwards the USSD communication session initiation message to the corresponding USSD Application Service 24.

The USSD Application service 24 generates a USSD response after receiving the USSD communication session initiation message, and transmits the USSD response to the USSD GW 18. The USSD GW 18 then transmits the USSD response to the network entity 20, the screening component 203 of which then screens the received message. In the event the USSD response is determined to satisfy the screening condition, the routing means 205 would determine a network node to transmit the USSD response. The routing means 205, by analysing the recipient ID associated with the USSD response, would route the USSD response to the MSC 2. Therefore, the USSD response would not have to travel via the HLR 14 and VLR 12 because of the intelligent routing capabilities of the routing means 205.

The MS 8, on receipt of the USSD response, generates a further USSD message, which is then routed to the network entity 20 via the MSC 2. In the event that the further USSD message is determined to satisfy the screening condition, the routing means 205, by analysing the at least one previous message which includes the USSD response, would be able to route the further USSD message to the USSD GW 18. As will be appreciated, conventional systems would have routed the further USSD message to the VLR 12. Therefore, the routing means 205 can reduce the USSD message delivery latency, and save valuable processing resources of core network entities, such as the VLR 12 and the HLR 14.

Therefore, the network entity 20 may reduce the USSD message latency by transmitting the message to a network node that is required to process the USSD message, rather than blindly transmitting the USSD message to a next network node on the network path of the USSD message. This reduces the exposure of the core network entities, such as the HLR 14, since these core network entities are involved in USSD message processing when necessary.

In a further arrangement, such as where the network entity 20 is also arranged to receive routing area update messages, the network entity 20 may request a route update or a binding update message from one of the network nodes on a message delivery path of a given USSD message, from the USSD Application Service 24 or from the MS 8. The route/binding update messages are then utilised by the routing means 205 to determine the next node to route a received USSD message. The route/binding update request may be supplied as a parameter in the USSD message structure, or may be supplied in a message that is not a part of a USSD communication session message sequence. The route/binding update information may be supplied periodically, or in response to an event, such as a change in association of the MS 8 with the MSC 2.

In some arrangements, the network entity 20 can be further adapted to perform the functionalities of the USSD GW 18 or 22. The network entity 20 would then also be responsible for converting a protocol of a USSD message per a signalling protocol of a signalling network, vice versa. In the event that a given received USSD message is of the second type, i.e. the given received USSD message satisfies the screening condition, the network entity 20 is arranged to generate a second USSD message using a second communication protocol such that the second communication protocol is different to a first communication protocol of the given received USSD message. This would enable the embodiments of the invention to be implemented on existing entities, thereby reducing the changes required to the network architecture to implement the embodiments of the invention. The first and the second communication protocol is each one of SS7 or Internet Protocol (IP).

In a further arrangement, the functionalities of the network entity 20 may further be combined with the HLR 14, a message intercepting means (such as the STP 6), the VLR 12 and the MSC 2.

In the embodiments described above, it is assumed that the network entity 20 performs the screening of all USSD messages received.

In at least some embodiments of the invention, the network entity 20 can further comprise a selective screening component 207. The selective screening component 207 is arranged to selectively perform the screening process, for example on the basis of certain predetermined communication conditions. The use of predetermined communication condition extends the capability of the network entity 20 by intelligently selecting when to screen USSD messages. In one arrangement the predetermined communication condition is dependent on whether a given received USSD message corresponds to a USSD message previously screened by the screening component 203 and identified as being incompatible with a corresponding USSD communication session, i.e. a USSD message of the first type, on the basis of the further criterion. Such messages are immediately discarded, without requiring any further processing of the currently received USSD message.

For example a previously screened USSD message with an incorrect service code would lead to all further USSD messages corresponding to the service code of the previously screened USSD message being discarded, even before invoking the screening component 203. Therefore, the selective screening component 207 reduces the load on the screening component 203 by ensuring that a given USSD message corresponds to a compatible type of previously screened USSD message, before passing the given USSD message to the screening process.

In an alternative arrangement, the selective screening component 207 maintains a log in relation all the USSD messages screened by the screening process and the predetermined communication condition. The selective screening component 207 then periodically analyses the log to identify frequently occurring causes that were determined to be incompatible with an associated USSD communication session. The selective screening component 207 utilises the identified causes to associate a weight with each of the further criterion. The network entity 20 then applies a given further criterion in an order of associated weights, thereby reducing the load on the screening process by eliminating a given USSD message on the basis of the frequently occurring causes.

The selective screening component 207 may also maintain a separate log in relation to every USSD application service, and identify frequently occurring causes in relation to every USSD application service. The network entity 20 then configures the further criterion individually for every application service by associating weights to a further criterion accordingly. Therefore, the network entity 20 would be able to discard messages quicker by verifying that a received USSD message is not compatible with a typical incompatible USSD message received from a same USSD application service.

The selective screening component 207 may store the predetermined communication condition and the further criterion, configured per the embodiment of the invention, in the internal memory of the network entity 20 or in the database DB1 external to the network entity 20.

In an arrangement, such as where the network entity 20 is arranged to store a USSD message transmitted previously to a received USSD message, the previous USSD messages may be stored on a database DB1 external, or separate, to the network entity 20. In an alternate arrangement, such as where the previous USSD messages are stored on an internal memory, the network entity 20 stores the previous USSD messages in a storage system integrated, or internal, to the network entity 20.

The DB1 or the internal memory may be configured to store the previous messages in their entirety, or may store information, such as a USSD message type, relating to the USSD message. After the received USSD message is processed, information relating to the received USSD message and/or the received USSD message is stored in the DB1 or the internal memory.

In a further arrangement, such as where the network entity 20 is arranged to generate an error message if a received USSD message fails to satisfy the screening condition, the network entity 20 is arranged to transmit an error message to one or both of the two end terminals of a corresponding USSD communication session. The error message may further comprise an error code and/or an error description. In response to receiving the error message, the USSD GW may terminate the USSD communication session. In a further arrangement, the USSD AS 16 or 9 may retransmit a USSD message correcting the incompatibility in the discarded USSD message.

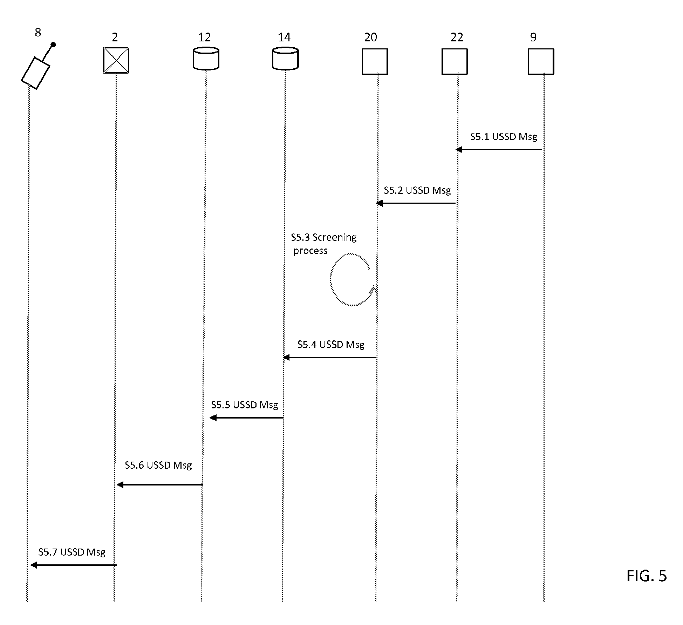

As example of the steps performed by the network entity 20, upon receipt of a USSD message will now be described with reference to figure 5, which is a timing diagram illustrating an embodiment of the invention when a USSD message is transmitted by the USSD AS 9 in response to receipt of a USSD message from MS 8. At step 5.1 the USSD AS 9 transmits a continue session USSD message to the USSD GW 22. At step 5.2, the USSD GW 22 processes the received USSD message per a USSD communication session corresponding to the received USSD message. The USSD GW 22, on the basis of transmission data associated with the received USSD message, determines a network node to route the received USSD message. In addition to determining the next node, the USSD GW 22 also converts messages per the signalling protocol of the signalling network, such as the SS7 protocol.

The USSD GW 22 determines that the recipient MS 8 of the received USSD message is associated with the communications network 10. The USSD GW 22 then routes the message to the network entity 20.

Since the USSD GW 22 is under the control of the communications network 10, the communications network 10 can configure the USSD GW 22 to route all incoming USSD messages to the network entity 20. However, in cases where messages originate outside of the communications network 10 the gateway 22 can be configured to route messages to a message redirection means such as an STP, which thereafter redirects USSD messages to the network entity 20.

At step 5.3, the network entity 20 screens the message to identify whether the received USSD message is compatible with the corresponding USSD communication session. In the event that the received USSD message is determined to be incompatible with the corresponding USSD communication session, the received USSD message is discarded, that is to say the USSD message is not transmitted further.

In the event that the received USSD message is determined to be compatible with the corresponding USSD communication session, the network entity 20 attempts to determine a network node to transmit the received USSD message.

In an arrangement, such as where the MS 8 has changed a current point of attachment, the routing means 205 attempts to acquire a current point of attachment, such as the MSC 2 the MS 8 is associated with. In the event that the network entity 20 is unable to determine the current point of attachment of the MS 8, the routing means 205 transmits the message to the HLR 14. The HLR 14 analyses the received message and routes the message according to the current point of attachment of the recipient MS 8. At step 5.7, the MS 8 receives the USSD message via the VLR 12 and MSC 2.

Whilst not shown in Figure 5, in the event that the network entity 20 is able to determine the current point of attachment of the MS 8, the routing means 205 is arranged to route the received USSD message in accordance with the current point of attachment of the MS 8, and thus without requiring to send any signalling messages to the HLR 14.

The above embodiments are to be understood as illustrative examples of the invention. Further embodiments of the invention are envisaged. For example, whilst the embodiments of the invention have been implemented on a single network entity, it will be understood that the embodiments of the invention can be implemented on a plurality of network entities which are interconnected by the communications network.

It will also be appreciated that the various components and means of the network entity may reside on a cluster of individual entities such that the cluster of individual entities appears as a single entity to an external entity.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A network entity for processing a USSD message belonging to a USSD communication session, the USSD communication session comprising a sequence of USSD messages in an interchange between two end terminals, each USSD message of the sequence having a prescribed USSD communication session ID, the network entity being responsive to a received USSD message whereby to perform a screening process in respect of said received USSD message, the screening process comprising:
evaluating the received USSD message on the basis of a predetermined criterion, wherein the predetermined criterion is based on at least one USSD message previous to the received USSD message and being one of the sequence of USSD messages of a given session, whereby to identify the received USSD as a first type of USSD message or a second, different, type of USSD message, the first type of USSD message being incompatible with the USSD communications session,
wherein, in the event that the received USSD message is determined to be of the first type, the network entity is arranged to discard the received USSD message.

2. A network entity according to claim 1, wherein, in the event that the received USSD message is determined to be of the second type, the second message being compatible with the at least one previous message, the network entity is arranged to route the received USSD message in accordance with transmission data associated therewith.

3. A network entity according to claim 1 or 2, wherein the network entity is arranged to configure the predetermined criterion after screening the received USSD message and before receiving a further USSD message belonging to the USSD communication session.

4. A network entity according to claim 1 or 2, wherein responsive to receipt of the USSD message the network entity is arranged to retrieve data indicative of the at least one USSD message previous to the received USSD message, whereby to configure the predetermined criterion.

5. A network entity according to any of claims 1 to 4, wherein, in the event that the network entity is unable to configure the predetermined criterion, the network entity is arranged to screen the received USSD message on the basis of a further criterion.

6. A network entity according to claim 5, wherein the further criterion includes one or more of the following:
a service code of the received USSD message;
a USSD session communication ID;
a visitor location register associated with an end terminal of the USSD communication session;
a mobile switching centre associated with an end terminal of the USSD communication session;
a recipient of the received USSD message;
a sender of the received USSD message;
an ID of a sender of the USSD message;
an ID of a recipient of the USSD message; and
the received USSD message's association with a given USSD communication session.

7. A network entity according to claim 2, wherein the network entity further comprising routing means, the routing means being arranged to determine a network node to transmit the USSD message on the basis of the transmission data and transmit the USSD message to the determined network node, in the event the received USSD message is identified to be of the USSD message of the second type.

8. A network entity according to claim 7, wherein, the determination of the network node is based on a recipient ID contained in the transmission data.

9. A network entity according to any of claims 7 or 8, wherein the determination of the network node is based on a USSD communication session ID associated with the received USSD message.

10. A network entity according to any of claims 7 to 9, wherein, the determination of the network node is based on the at least one previous USSD message.

11. A network entity according to any of the preceding claims, wherein, in the event that the USSD message is of the second type, the network entity is arranged to generate a second USSD message using a second communication protocol, different to a first communication protocol of the received USSD message.

12. A network entity according to claim 11, wherein the first and the second communication protocol is each one of SS7 or IP.

13. A network entity according to any of the preceding claims, wherein the network entity is arranged to selectively perform the screening process on the basis of at least one predetermined communication condition, the screening process being performed in the event that a said predetermined communication condition is satisfied.

14. A network entity according to claim 13, wherein the predetermined communication condition comprises: the received USSD message corresponds to a USSD message previously screened by the network entity and identified as being of the second type on the basis of the further criterion.

15. A network entity according to any of the preceding claims, wherein the at least one previous message is stored in a storage system separate from the network entity.

16. A network entity according to any of claims 1 to 14, wherein the at least one previous message is stored in a storage system integral to the network entity.

17. A network entity according to any of the preceding claims, wherein, in the event that the USSD message is identified as the USSD message of the first type, the network entity is arranged to transmit an error message to one or both of the two end terminals.

18. A method for processing a USSD message belonging to a USSD communication session, the USSD communication session comprising a sequence of USSD messages in an interchange between two end terminals, each USSD message of the sequence having a prescribed USSD communication session ID, the method comprising:
in response to a received USSD message, performing a screening process in respect of said received USSD message, the screening process comprising:
evaluating the received USSD message on the basis of a predetermined criterion, wherein the predetermined criterion is based on at least one USSD message previous to the received USSD message and being one of the sequence of USSD messages of a given session, whereby to identify the received USSD as a first type of USSD message or a second, different, type of USSD message, the first type of USSD message being incompatible with the USSD communications session,
wherein, in the event that the received USSD message is determined to be of the first type, the screening process comprises discarding the received USSD message.

19. A computer program, or a suite of computer programs, comprising a set of instructions arranged to cause a computer, or a suite of computers, to perform the method of claim 18.

20. A mobile communications system capable of conducting a USSD communications session between a mobile station associated with said mobile communications session and an application server configured to provide a service in respect of said mobile station, the mobile communications system comprising a network entity according to any one of claim 1 to claim 17.
